# EUROPEAN PATENT APPLICATION

(11) **EP 4 745 205 A1**
(43) Date of publication of application: **20.05.2026**
(21) Application number: 24212688.6
(22) Date of filing: 13.11.2024
(51) Int. Cl.: C09D 11/34, C09D 11/101, C09D 11/40, C09D 11/38, B29C 64/112, B33Y 10/00, B33Y 70/00

(54) **METHOD FOR PRINTING A STRUCTURE, OBJECT HAVING A STRUCTURE, INK SET AND PRINTING APPARATUS**

(71) Applicant: Canon Production Printing Holding B.V., 5914 HH Venlo (NL)
(72) Inventor: LOENEN,Arjan C.Y., Venlo (NL); VAN DER ASDONK, Pim, Venlo (NL)
(74) Representative: Canon Production Printing IP Department

(57) **Abstract**

The invention relates to a method for printing a structure. The invention further relates to an object having a structure. In addition, the invention relates to an ink set. The invention also relates to a printing apparatus.

## Description

The invention relates to a method for printing a structure. The invention further relates to an object having a structure. In addition, the invention relates to an ink set. The invention also relates to a printing apparatus.

### Background of the invention

Inkjet print systems can be used to additively build 3D structures layer-by-layer. This production method is often referred to as 3D printing or additive manufacturing. Typically, the geometry of the desired object is digitally sliced in the print direction in order to generate the spatial information per layer. Based on this information, ink is jetted and cured within each of the layers. Because fresh ink can land and be supported by the already cured structures, one layer can be stacked on top of the preceding layers. However, in case of overhanging structures, a support structure is required for the fresh droplets to be jetted on. The support structure should provide sufficient support to the structures above but should also be easily and completely removable. Most UV inkjet support structures attach firmly to the structure above and may be hence hard to remove. When the support structure is hard to remove, significant post-processing time may be needed and there is a risk that the printed material might be damaged.

It is therefore an object of the invention to provide a method for printing 3D structures that provide a more efficient way of removing a support structure.

### Summary of the invention

The object of the invention is achieved in a printing method for making structures, wherein the printing method comprises the following steps:
a. printing a support layer using a first ink composition;
b. printing a structure layer using a second ink composition; and
c. removing the support layer;
wherein the first ink composition comprises a first gellant and the second ink composition comprising a second gellant, different from the first gellant, wherein the first gellant is sunflower wax.

In the method according to the present invention, a printed object may be prepared. The printed object may be a structure. The structure may preferably be a three-dimensional (3D) object or relief structure (2.5D). The object may be prepared using a suitable printing technique, preferably inkjet printing.

In the method according to the present invention, in step a, a support layer is printed using a first ink composition. Printing may be performed using a print device, for example an ink applicator such as an inkjet print head.

The support layer may be applied onto a recording medium. The recording medium may be selected from any recording medium suitable for 2.5 D and/or 3D applications. Such examples are known by the person skilled in the art. Examples of such media include polymeric media, glass media, ceramic media and metallic media, and media comprising a mixture thereof. An example of a commercially available recording medium is Dibond ^{®} medium. Optionally, the recording medium may be an object, such as a 2,5D or 3D printed object.

The first ink composition may be a phase change ink composition. A phase change ink composition is an ink composition that is fluid at elevated temperatures and solid or semi-solid at lower temperatures. Phase change inks are also referred to as hotmelt ink compositions or gelling ink compositions. Preferably, the ink compositions are radiation-curable. An example of a radiation-curable phase change ink is a UV gel ink. The first ink composition comprises a first gellant.

The support layer is a layer forming (part of) the support structure for the structure being printed.

In the method according to the present invention, in step b, a structure layer is printed using a second ink composition onto a recording medium. Printing may be performed using a print device, for example an ink applicator such as an inkjet print head.

The first ink composition and the second ink composition may preferably be applied using separate print units. Separate print units may be e.g. separate inkjet print heads or separate nozzles or nozzle groups within a single inkjet print head. The structure layer is a layer forming (part of) the structure being printed.

In the method according to the present invention, in step c, the support layer is removed.

The support layer may be removed mechanically and/or manually. Examples of manual removal of the support layer are for example peeling of the support layer, breaking off the support structure form the structure, and tearing the support structure from the structure. Optionally, one or more tools may be used to remove the support layer.

In the method according to the present invention, the first gellant is sunflower wax. Sunflower wax is a high melting-point, crystalline vegetable wax obtained from sunflower oil. Sunflower wax consists of long chain, saturated C-42 to C-60 esters, which are derived from fatty acids and fatty alcohols.

In the method according to the present invention, the second gellant is a gellant different from the first gellant. Hence, the second gellant is a gellant other than sunflower wax. Examples of gellants used in ink compositions are waxes, such as paraffin wax, microcrystalline wax, polyethylene waxes, polypropylene waxes, curable waxes and natural waxes, such as animal-based waxes or plant-based waxes, fatty acids, fatty alcohols, ketones, fatty acid esters, such as fatty acids of pentaerythritol and/or fatty acid esters of dipentaerythritol; and fatty acid amides. Because gelling inks have reduced spread of ink on the recording medium, due to their gelling property, it may not be necessary to cure the ink droplets immediately after applying them onto the recording medium. It is possible to keep the droplets in an uncured state on the recording medium, without color bleeding occurring. In the first ink composition and in the second ink composition, the gellant may be present in an amount of from 0.1 wt% to 15 wt% based on the total weight of the ink composition, preferably from 0.2 wt% to 10 wt% based on the total weight of the ink composition, more preferably from 0.3 wt% to 5 wt% based on the total weight of the ink composition.

In an embodiment, the second ink composition is a radiation-curable ink composition. The radiation-curable inkjet ink composition may comprise a radiation-curable medium. The radiation-curable medium may comprise at least one radiation-curable component. A radiation-curable component is a component that may react (e.g. polymerize) under influence of suitable radiation, such as electromagnetic radiation, e.g. ultraviolet (UV) radiation. Examples of radiation-curable components are epoxides and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

The radiation-curable medium may further comprise at least one inhibitor. An inhibitor is a component that prevents (inhibits) unwanted polymerization of the radiation-curable compound. Inhibitors may be added to the radiation curable inkjet ink composition to increase the shelf life of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and/or anti-fungi components.

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color.

In an embodiment, the first ink composition is a radiation-curable ink composition.

In a further embodiment, wherein the ink is cured within 2 seconds after being printed.

The ink may be cured by applying suitable radiation, such as UV-radiation. The radiation may be provided by a suitable source of radiation. Examples of sources of radiation are lamps, such as halogen lamps, mercury lamps and LED lamps. By curing the ink within less 2 seconds after being printed, excessive flow of ink droplets may be prevented. Further, a layer of ink may be cured before a subsequent layer is applied on top. Hence, by curing the ink within 2 seconds after being printed, a structure may be created that is well cured.

In an embodiment, the second gellant is a fatty acid ester. Fatty acids are suitable for forming esters, when reacted with a compound comprising an hydroxyl functional group. The fatty acids may be saturated or non-saturated fatty acids. Non-saturated fatty acids may be monounsaturated fatty acids or polyunsaturated fatty acids. Non-saturated fatty acids comprise an alkene functional group. Upon curing of the ink, the alkene functional group may react and the ester compound may be incorporated in the network formed by the radiation-curable component. Preferably, the fatty acid is a saturated fatty acid.

When the compound B is a fatty acid, no so-called blooming of the ink may occur. Blooming is an unwanted phenomena that may occur in ink composition, such as radiation-curable ink composition comprising a gelling agent.

Preferably, the gellant is an ester obtainable by a condensation reaction between a fatty acid and a component selected from the group consisting of pentaerythritol, cyclodextrine, glycerol, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane. Preferably, the fatty acid is a component of the formula R₁C(O)OH, wherein R₁ is selected from an alkyl group having 10 to 35 carbon atoms, preferably 15 to 25 carbon atoms.

In an embodiment, the printing method includes printing a plurality of support layers and printing a plurality of structure layers, wherein the number of support layers and the number of structure layers may locally vary.

The structure may be a three-dimensional object having a dimension in x, y and z-direction. The structure may be built on a receiving medium. The receiving medium may have a direction in x and y direction. The height of the object (i.e. the dimension in the z-direction) may locally vary. Therefore, the number of support layers and the and the number of structure layers may locally vary.

In an aspect of the invention, an object is provided, the object having a relief structure prepared by a method according to the present invention. The object can be suitably prepared using the method according to the present invention.

In a further aspect of the invention, an ink set is provided, the ink set comprising a first ink composition and a second ink composition, the first ink composition comprising one or more radiation-curable monomers and/or oligomers, a photo initiator and a first gellant, the first gellant being sunflower wax, the second ink composition comprising one or more radiation-curable monomers and/or oligomers, a photo initiator and a second gellant.

In an embodiment, the second gellant is a fatty acid ester.

In a further aspect of the invention, a printing apparatus is provided, the printing apparatus comprising:
a. a first ink applicator for applying a first ink composition;
b. a second ink applicator for applying a second ink composition;
c. optionally comprising a curing unit; and
d. a controller configured to control the printing apparatus to perform a method according to the present invention.

The printing apparatus is hence configured to perform the method according to the present invention.

### Brief description of the drawings

These and further features and advantages of the present invention are explained hereinafter with reference to the accompanying drawings showing non-limiting embodiments and wherein:
Fig. 1 is a block diagram of a printing system according to the invention;
Fig. Fig. 2A-2E show a schematic representation of a first embodiment of the method for printing structures according to the present invention.
Fig. 3A - 3B show front views of the objects formed in Image Formation Example 1 (3A) and Image Formation Example 2 (3B), respectively.

In the drawings, same reference numerals refer to same elements.

### Detailed description of the drawings

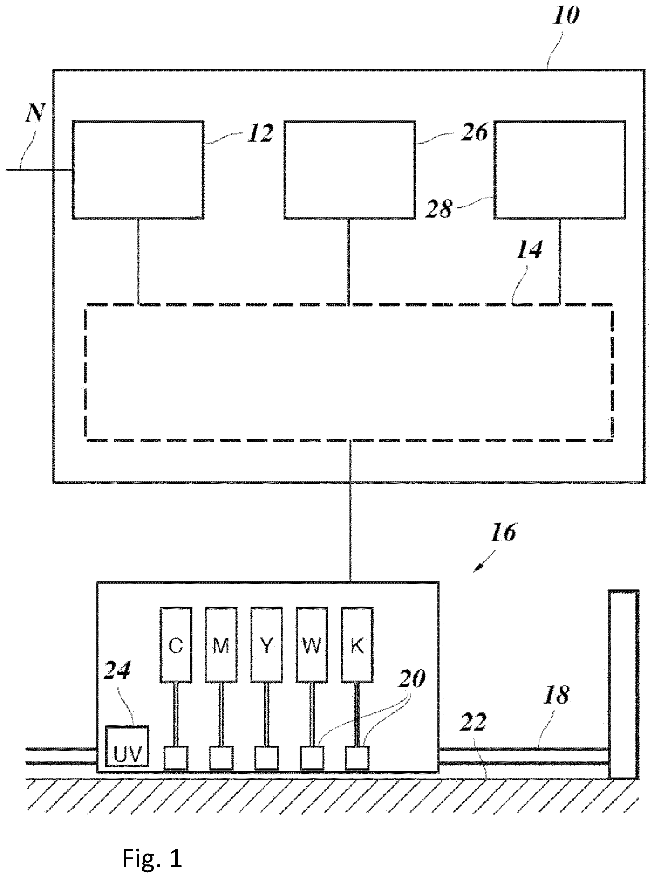

Fig. 1 schematically shows a print system for printing 3D objects by depositing material on a support in a number of printing passes. A print controller 10 receives print data in the form of a rasterized object image comprising height data, e.g. in the form of a height channel, for indicating a height of each pixel of the rasterized object image, and comprising color data, e.g. in the form of a number of color channels, for indicating a color of each pixel. For example, there are five customary color channels for colorants of the colors cyan (C), magenta (M), yellow (Y), white (W), black (K). The height data specify, for two-dimensional print coordinates X, Y, the height of the respective pixel of the image. The height data describes a height, i.e. a thickness, of the object in the third dimension Z.

The print controller 10 includes a communication interface 12 connected e.g. to a network N for receiving the print data, and a raster image processor 14 configured for converting the print data into a number of pass images in a format suitable for driving a print engine 16 synchronized with a motion control system 18 configured for controlling relative motion between printheads 20 of the print engine 16 and a support 22. The motion control system 18 comprises print carriage motion controllers of first and second printing directions X, Y and, optionally a print carriage height controller Z for controlling a height of the printheads 20 above the support 22. For example, the motion control system 18 is configured to control relative motion between the printheads 20 and the support 22 in the X, Y, and Z direction. The printheads have nozzles for jetting the colorants onto the support. The print system is a system for printing relief prints using UV curable ink and includes a UV curing device 24.

The print controller 10 further comprises a memory 26 and a random number generating unit 28 in the form of a pseudorandom number generator, which may be implemented in software.

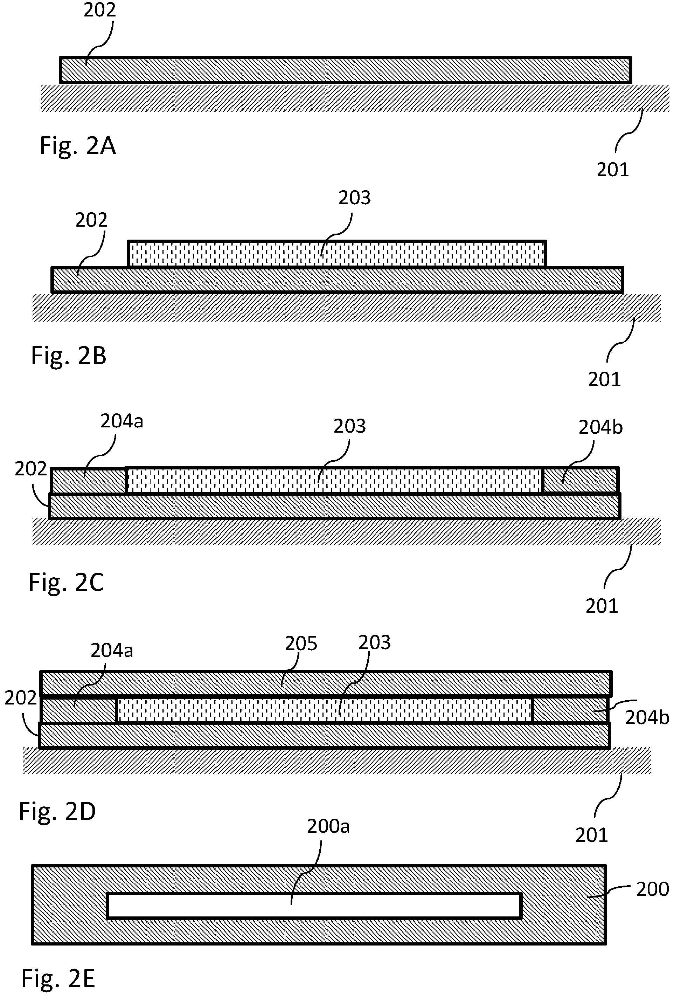

Fig. 2A-2E show a schematic representation of a first embodiment of the method for printing structures according to the present invention.

In Fig. 2A a recording medium 201 is shown. The recording medium 201 is provided with a structure layer 202. The structure layer 202 is formed by applying droplets of a second ink composition.

Fig. 2B shows the recording medium 201 provided with a structure layer 202. Locally, a support layer 203 is applied onto the support layer 202. The support layer 203 is formed by applying droplets of a first ink composition. In the embodiment shown in Fig 2B, the support layer 203 does not entirely cover the structure layer 202. In an alternative embodiment, the support layer 203 may entirely cover the structure layer 202.

Fig. 2C shows the recording medium 201 provided with a structure layer 202, the support layer 203 and structure layers 204a and 204 b. The structure layers 204a, 204b are formed by applying droplets of a second ink composition.

Fig. 2D shows the recording medium 201 provided with a structure layer 202, the support layer 203, structure layers 204a and 204 b and structure layer 205. The structure layer 205 is formed by applying droplets of a second ink composition.

Fig. 2E shows the printed structure 200 comprising a cavity 200a. This structure is formed by the methos shown in Fig. 2A - 2D and subsequent removal of the layers form the recording medium 201 and removal of the support layer 203.

### Experiments and examples

### Materials

SR355, SR339C, SR410, SR531, CN3715 and CN991 were obtained from Arkema, ITX and EDB were obtained from Rahn, BYK 333 was obtained from BYK, pentaerythritoltetrastearate was obtained from TCI chemicals, BAPO was obtained from Arkema (Lambson), phenothiazine was obtained from Allessa. All chemical were used as received.

Avery MPI2000, which was obtained from Avery Denison was used as recording medium.

### Methods

### Image formation

Prints were prepared by printing the ink using a Colorado 1650 printer. The temperature of the recording medium was controlled to be 24°C. Avery MPI2000 was used as recording medium. Objects were printed having a dimension of 22 mm × 22 mm × 4 mm (*I × b x h*), the objects including the structure and the support.

### Ink Examples

Ink compositions 1 and 2 were prepared by providing the components shown in table 1 in the amount shown in table 1 and mixing the components.

The first ink composition is ink composition **Ink 1,** which is an ink composition according to the present invention; the second ink composition is **Ink 2.**

**Table 1: Ink examples 1 and 2**

| Component | **Ink 1** | **Ink 2** |
|---|---|---|
| SR339C | 19.63 wt% | 19.63 wt% |
| SR410 | 19.63 wt% | 19.63 wt% |
| SR531 | 19.64 wt% | 19.64 wt% |
| CN991 | 23.00 wt% | 23.00 wt% |
| SR355 | 1.50 wt% | 1.50 wt% |
| BAPO | 1.00 wt% | 1.00 wt% |
| ITX | 4.50 wt% | 4.50 wt% |
| EDB | 4.50 wt% | 4.50 wt% |
| CN3715 | 5.00 wt% | 5.00 wt% |
| BYK333 | 0.50 wt% | 0.50 wt% |
| phenothiazine | 0.10 wt% | 0.10 wt% |
| Sunflower wax | 1 wt% | 0 |
| pentaerythritoltetrastearate | 0 | 1 wt% |

### Image formation experiments.

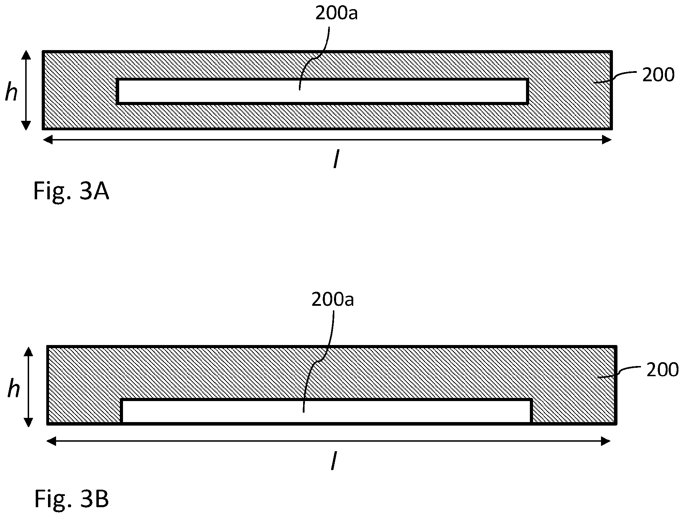

In Image Formation Experiment 1, an object was prepared having a bottom formed by **Ink 2,** an interior support structure covering part of the bottom layer formed by **Ink 1,** and a top layer formed by **Ink 2,** the top layer covering the interior support structure and the part of the bottom layer not covered by the support layer. A front view of the object is shown in Fig. 3A.

In Image Formation Experiment 2, an object was prepared having a bottom formed by **Ink 1,** wherein the bottom has a length and a height smaller than the length and the height of the object, but a width equal to the object. On top of the bottom layer and, in width direction, next to the bottom layer, a structure was formed by depositing **Ink 2.** A front view of the object is shown in Fig. 3B.

After forming the objects, the support layer was removed manually. For the object formed according to Image Formation Example 1, this was done by manually squeezing the object in the length direction. By squeezing the object, the support structure was detached from the structure.

For the object formed according to Image Formation Example 2, the support layer was removed by manually bending the object in the width direction. By bending the object, the support structure was detached from the structure.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Printing method for making structures, wherein the printing method comprises the following steps:
a. printing a support layer using a first ink composition;
b. printing a structure layer using a second ink composition; and
c. removing the support layer;
wherein the first ink composition comprises a first gellant and the second ink composition comprising a second gellant, different from the first gellant, wherein the first gellant is sunflower wax.

2. Method according to claim 1, wherein the second ink composition is a radiation-curable ink composition.

3. Method according to claim 1 or 2, wherein the first ink composition is a radiation-curable ink composition.

4. Method according to claim 3, wherein the ink is cured within 2 seconds after being printed.

5. Method according to any of the preceding claims, wherein the second gellant is a fatty acid ester.

6. Method according to any of the preceding claims, wherein the printing method including printing a plurality of support layers and printing a plurality of structure layers, wherein the number of support layers and the structure layers may locally vary.

7. Object having a relief structure prepared by a method according to any of the claims 1-6.

8. Ink set comprising a first ink composition and a second ink composition, the first ink composition comprising one or more radiation-curable monomers and/or oligomers, a photo initiator and a first gellant, the first gellant being sunflower wax, the second ink composition comprising one or more radiation-curable monomers and/or oligomers, a photo initiator and a second gellant.

9. Ink set according to claim 8, wherein the second gellant is a fatty acid ester.

10. Printing apparatus, the printing apparatus comprising:
a. a first ink applicator for applying a first ink composition;
b. a second ink applicator for applying a second ink composition;
c. optionally comprising a curing unit; and
d. a controller configured to control the printing apparatus to perform a method according to any of the claims 1-6.
